# EUROPÄISCHE PATENTSCHRIFT

(11) **EP 2 914 864 B1**
(45) Veröffentlichungstag und Bekanntmachung des Hinweises auf die Patenterteilung: **24.02.2021**
(21) Anmeldenummer: 13795188.5
(22) Anmeldetag: 31.10.2013
(51) Int. Cl.: F16D 49/02, F16D 59/00, F16H 25/24, E05F 15/622

(54) **ANTRIEBSEINRICHTUNG**
DRIVE DEVICE
DISPOSITIF D'ENTRAÎNEMENT

(30) Priorität: 02.11.2012 DE 102012110505
(43) Veröffentlichungstag der Anmeldung: 09.09.2015
(73) Patentinhaber: Stabilus GmbH, 56070 Koblenz (DE)
(72) Erfinder: RITTER, Andreas, 56206 Hilgert (DE); BATOSKY, Oleg, D-56154 Boppard-Oppenhausen (DE); HILLEN, Jörg, 56283 Nörtershausen (DE)
(74) Vertreter: Klein, Thomas
(86) Internationale Anmeldenummer: PCT/EP2013/072831
(87) Internationale Veröffentlichungsnummer: WO 2014/068068

(56) Entgegenhaltungen:
- DE-A1-102009 029 167
- DE-U1- 9 409 013
- DE-U1-202007 015 597
- US-A- 4 763 764

## Beschreibung

Die Erfindung bezieht sich auf eine Antriebseinrichtung für ein bewegbares Bauteil, mit einem an einem ersten Ende mit einem ersten rotationssymmetrischen Bauelement verbindbaren ersten Befestigungselement und mit einem an dem dem ersten Befestigungselement entgegengesetzten Ende relativ dazu bewegbaren zweiten rotationssymmetrischen Bauelement, das an seinem dem ersten Befestigungselement entgegengesetzten Ende ein mit dem bewegbaren Bauteil befestigbares zweites Befestigungselement aufweist, mit einem eine Gewindespindel und eine auf der Gewindespindel angeordneten Spindelmutter aufweisenden Spindeltrieb, durch den das erste Befestigungselement und das zweite Befestigungselement axial relativ zueinander bewegbar antreibbar sind, wobei die Spindel des Spindeltriebs von einer von einem drehfest in einem Gehäuse angeordneten Drehantrieb drehbar antreibbaren Antriebswelle reversierbar um eine Drehachse drehbar antreibbar ist, die sich koaxial zur Gewindespindel erstreckt und mit einer Bremseinrichtung, durch die ein axial relatives Zueinanderbewegen des ersten und zweiten Befestigungselement durch eine axiale Kraftbeaufschlagung des ersten und/oder zweiten rotationssymmetrischen Bauelements blockierbar ist.

Derartige Antriebseinrichtungen sind in der Praxis beispielsweise für das Öffnen und Schließen von Heckklappen, Kofferraumdeckeln, Motorhauben und zuweilen auch von Türen in Kraftfahrzeugen bekannt. Damit sich die Klappen und Hauben nicht verziehen werden oftmals beide Seiten der Klappen elektromechanisch angetrieben.

Bei Antrieben ohne Bremseinrichtung besteht das Problem, daß durch ungewollte eigendynamische Bewegungen in Folge von äußeren Kräften die angefahrene Stopp-Position des bewegbaren Bauteils nicht beibehalten werden kann und es zu unkontrollierten Bewegungen des Antriebs kommt. Solche äußeren Kräfte können z. B. das Eigengewicht der Klappe oder auf die Klappe einwirkende Federkräfte sein.

Um dies zu verhindern ist es bekannt als Bremseinrichtung eine Fliehkraftbremse zu verwenden. Diese besitzt einen aufwendigen Aufbau und benötigt einen großen Einbauraum.

Aus der DE 20 2007 015597 U1 ist eine Antriebseinrichtung mit einem Spindeltrieb bekannt, der eine als Schlingfederbremse ausgebildete Bremseinrichtung aufweist, die eine Bremsfeder aufweist, wobei die beiden freien Enden der Bremsfeder an einem mit der Gewindespindel fest verbundenen Element fixiert sind und die Wicklung an der Innenwand einer die Bremsfeder umschließenden, mit einem drehfesten Teil der Antriebseinrichtung verbundenen Hülse in Anlage ist.

Aus der DE 10 2009 029 167 A1 ist eine Schlingfeder bei einer Antriebsvorrichtung bekannt, die aus einem ersten Abschnitt und einem zweiten Abschnitt besteht, wobei die einen Enden miteinander verbunden sind. Beide Abschnitte besitzen dieselbe Wicklungsrichtung.

Aus der DE 9409013 U1 ist bei einer Antriebsfeder für einen Fensterheber bekannt die beiden freien Enden einer als Schlingfeder ausgebildeten Bremsfeder an einem Verbindungsglied zu fixieren, das nicht drehfest ist.

Aufgabe der Erfindung ist es eine Antriebseinrichtung der eingangs genannten Art zu schaffen, die bei einfachem Aufbau und geringer Baugröße eine Bremswirkung der Bremseinrichtung in beide Bewegungsrichtungen aufweist und dabei unterschiedliche Bremsmomente ermöglicht.

Diese Aufgabe wird erfindungsgemäß dadurch gelöst, daß die Bremseinrichtung eine Schlingfederbremse ist, die eine Schaltfeder und eine Bremsfeder besitzt, die in axialer Richtung gewickelt sind, und die Schaltfeder und die Bremsfeder unterschiedliche Wicklungsrichtungen besitzen sowie mit ihren einen Enden miteinander verbunden sind, wobei bei Nichtdrehantrieb der Antriebswelle die Schaltfeder an dem ersten rotationssymmetrischen Bauelement und die Bremsfeder an dem zweiten rotationssymmetrischen Bauelement radial mit Reibschluß in Anlage und eine Drehbewegung der Gewindespindel blockiert ist, wobei bei Drehantrieb der Antriebswelle in eine erste Drehrichtung der Reibschluß der Schaltfeder mit dem ersten rotationssymmetrischen Bauelement und bei Drehantrieb der Antriebswelle in eine zweite Drehrichtung der Reibschluß der Bremsfeder mit dem zweiten rotationssymmetrischen Bauelement lösbar ist und wobei die Bremsfeder mit einem größeren Reibmoment an dem zweiten rotationssymmetrischen Bauelement in Anlage ist als die Schaltfeder an dem ersten rotationssymmetrischen Bauelement in Anlage ist und das erste rotationssymmetrische Bauelement ein zylindrischer Teil der Gewindespindel oder ein mit der Gewindespindel fest verbundenes erstes zylindrisches Element ist, wobei der zylindrische Teil der Gewindespindel oder das zylindrische Element von der Schaltfeder umschlossen ist und wobei die Bremsfeder mit ihrem Außenumfang in Anlage an der zylindrischen Innenwand des Gehäuses oder eines mit dem Gehäuse fest verbundenen zweiten Elements ist.

Diese Ausbildung benötigt nur die einfach aufgebauten und kostengünstigen Schlingfedern ausgebildete Schaltfeder und Bremsfeder, die wenig Bauraum und keinerlei Betätigungseinrichtung zum Betätigen der Bremseinrichtung erfordern. Damit kann die Baugröße der Antriebseinrichtung gering gehalten werden. Die Betätigung der Bremseinrichtung erfolgt automatisch durch den zum Betrieb der Antriebseinrichtung erforderlichen Drehantrieb oder Nichtdrehantrieb der Gewindespindel.

Durch die Schaltfeder und Bremsfeder erfolgt eine Bremswirkung bis zu einem bestimmten Bremsmoment in beide Bewegungsrichtungen.

Das bewegbare Bauteil kann eine Klappe wie eine Heckklappe, ein Kofferraumdeckel, eine Motorhaube oder auch eine Tür eines Fahrzeugs sein, die an der Karosserie des Fahrzeugs angelenkt ist.

Weiterhin wird die Anzahl der Bauteile reduziert, wenn die Schaltfeder und die Bremsfeder einteilig ausgebildet sind.

Die Schaltfeder und die Bremsfeder können unterschiedliche Durchmesser aufweisen.

Weist im Einbauzustand die Schaltfeder den gleichen Durchmesser wie die Bremsfeder auf, so führt dies zu einer Reduzierung des Durchmessers der Antriebseinrichtung.

Das mit der Gewindespindel fest verbundene erste zylindrische Element kann eine fest auf der Gewindespindel angeordnete Nabe sein. Dadurch kann die Bremsfeder einen größeren Innendurchmesser als dem Außendurchmesser der Gewindespindel aufweisen, was zum einen zu einer Erhöhung des Bremsmoments und zum anderen zu einem leichteren Lösen der der Bremsfeder von der Nabe führt.

Zu einem kompakten Aufbau führt es, wenn die Gewindespindel drehbar in dem Gehäuse gelagert ist.

Vorzugsweise ist die Gewindespindel von einem reversierbaren Elektromotor drehbar antreibbar.

Ein Ausführungsbeispiel der Erfindung ist in der Zeichnung dargestellt und wird im folgenden näher beschrieben. Es zeigen
- Figur 1: ein erstes Ausführungsbeispiel einer Antriebsvorrichtung im Längsschnitt
- Figur 2: eine Stirnansicht der Schlingfedern der Antriebseinrichtung nach Figur 1
- Figur 3: einen Schnitt entlang der Linie II-II in Figur 2

Die dargestellte Antriebseinrichtung weist ein rohrförmiges Gehäuse 1 auf, in dem ein nicht dargestellter reversierbarer Elektromotor angeordnet ist, durch den über eine Kupplung 2 eine Gewindespindel 3 eines Spindeltriebs um eine Drehachse 6 drehbar antreibbar ist.

Die Gewindespindel 3 ragt mit ihrem motorseitigen Ende in eine entsprechende koaxiale Ausnehmung eines drehbar antreibbaren Kupplungsteils 4, das über ein Rillenkugellager 5 drehbar im Gehäuse 1 gelagert ist.

Auf der Gewindespindel 3 ist eine nicht dargestellte Spindelmutter des Spindeltriebs angeordnet.

Durch den Spindeltrieb sind ein erstes und ein zweites rotationssymmetrisches Bauelement 3, 7; 1, 11, 12 axial relativ zueinander bewegbar antreibbar. Dabei kann das erste rotationssymmetrische Bauelement 3, 7 feststehend angeordnet sein. Das zweite rotationssymmetrische Bauelement 1, 11, 12 kann um eine Schwenkachse schwenkbar an einem ersten Bauteil angelenkt sein.

Benachbart zum Rillenkugellager 5 ist auf der Gewindespindel 3 eine Nabe 2 fest angeordnet, die Teil einer Schlingfederbremse 8 ist, die bei einem Drehantrieb gleich welcher Richtung der Gewindespindel 3 durch den Elektromotor gelöst und bei Nichtantrieb und axialer Belastung der Spindelmutter ein Drehen der Gewindespindel bis zu einem bestimmten Bremsmoment blockiert.

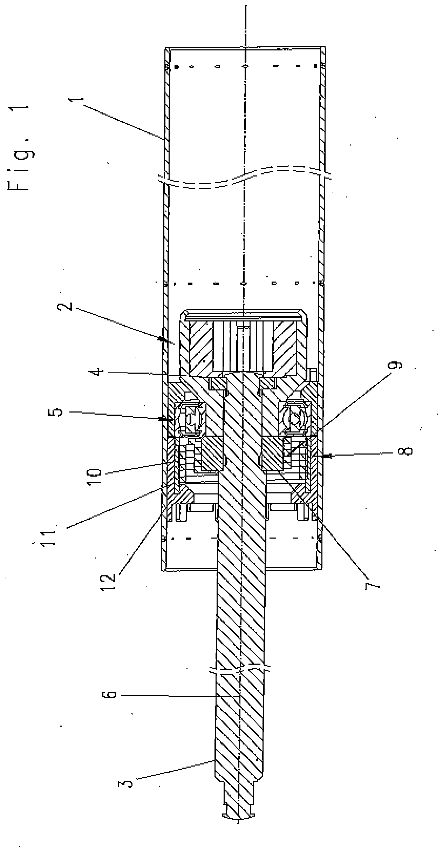

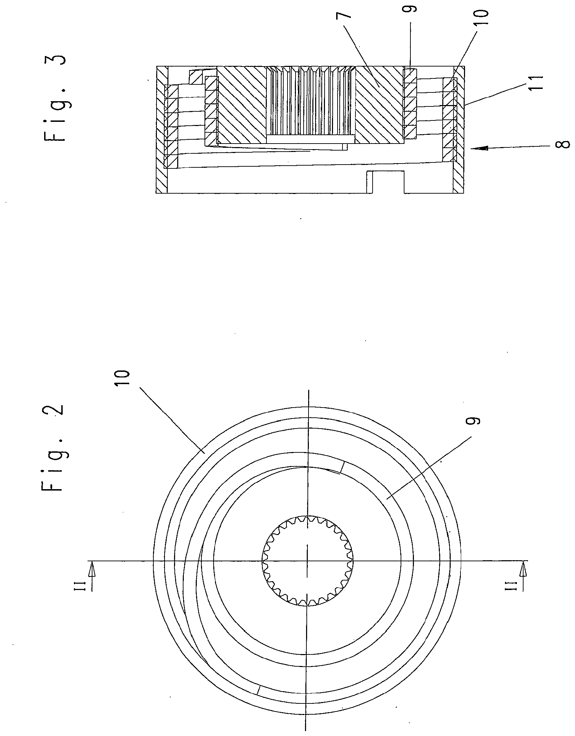

Bei dem Ausführungsbeispiel der Figuren 1 bis 3 weist die Schlingfederbremse 8 eine als Schlingfeder ausgebildete Schaltfeder 9 auf, die mit radialer Vorspannung auf die Nabe 7 aufgesetzt ist.

Das eine Ende der Schaltfeder 9 ist radial nach außen geführt und bildet ein Ende einer als Schlingfeder ausgebildete Bremsfeder 10, die mit radialem Abstand die Schaltfeder 9 umschließt und mit der radial äußeren Seite ihrer Windungen mit radialer Vorspannung in eine Hülse 11 eingesetzt ist.

Die Hülse 11 ist über einen Stützring 12 fest in das Gehäuse 1 eingesetzt.

Die als Einbauteil ausgebildeten Schaltfeder 9 und Bremsfeder 10 sind in die gleiche Drehrichtung aber in entgegengesetzte axiale Richtung gewickelt.

Bei Drehung in eine Richtung der Gewindespindel 3 und darauf fest angeordneter Nabe 7 erhöht sich die Reibung zwischen der Mantelfläche der Nabe 7 und der Innenseite der Schaltfeder 9, bis sich die Schaltfeder 9 und Bremsfeder 10 mit der Nabe 7 drehen. Durch die Drehung der Bremsfeder 10 wird die Reibung zwischen der Außenseite der zweiten Schlingfeder 10 und der feststehenden Hülse 11 verringert, so daß die Bremsfeder 10 an der Innenseite der Hülse 11 schleift.

Bei Drehung der Gewindespindel 3 und der Nabe 7 in die andere Richtung verringert sich die Reibung zwischen der Außenseite der Nabe 7 und der Innenseite der Schaltfeder 9 und die Reibung zwischen der Hülse 11 und der Außenseite der Bremsfeder 10 wird erhöht, so daß die Bremsfeder 10 sich nicht gegenüber der Hülse 11 drehen kann.

Die Innenseite der Schaltfeder 9 kann aber auf der Nabe 7 schleifen. Durch die unterschiedlichen Wirkdurchmesser der Schaltfeder 9 und der Bremsfeder 10 wird je nach Drehsinn der Nabe ein unterschiedliches Bremsmoment erzielt.

Die Höhe des Bremsmoments kann durch die Vorspannung der Schaltfeder 9 auf der Nabe 7 bzw. der Bremsfeder 10 in der Hülse 11 eingestellt werden.

Bei entsprechend kleiner Einstellung des Bremsmoments in eine Richtung kann eine Freischaltung in diese Richtung erfolgen.

## Patentansprüche

1. Antriebseinrichtung für ein bewegbares Bauteil, mit einem an einem ersten Ende mit einem ersten rotationssymmetrischen Bauelement (3, 7) verbindbaren ersten Befestigungselement und mit einem an dem dem ersten Befestigungselement entgegengesetzten Ende des ersten rotationssymmetrischen Bauelements (3, 7) relativ dazu bewegbaren zweiten rotationssymmetrischen Bauelement (1, 11, 12), das an seinem dem ersten Befestigungselement entgegengesetzten Ende ein mit dem bewegbaren Bauteil befestigbares zweites Befestigungselement aufweist, mit einem eine Gewindespindel (3) und eine auf der Gewindespindel (3) angeordneten Spindelmutter aufweisenden Spindeltrieb, durch den das erste Befestigungselement und das zweite Befestigungselement axial relativ zueinander bewegbar antreibbar sind, wobei die Spindel des Spindeltriebs von einer von einem drehfest in einem Gehäuse (1) angeordneten Drehantrieb drehbar antreibbaren Antriebswelle reversierbar um eine Drehachse (6) drehbar antreibbar ist, die sich koaxial zur Gewindespindel (3) erstreckt und mit einer Bremseinrichtung, durch die ein axial relatives Zueinanderbewegen des ersten und zweiten Befestigungselements durch eine axiale Kraftbeaufschlagung des ersten und/oder zweiten rotationssymmetrischen Bauelements (3, 7) (1, 11, 12) blockierbar ist, **dadurch gekennzeichnet, daß** die Bremseinrichtung eine Schlingfederbremse ist, die eine Schaltfeder (9) und eine Bremsfeder (10) besitzt, die in axialer Richtung gewickelt sind, und die Schaltfeder (9) und die Bremsfeder (10) unterschiedliche Wicklungsrichtungen besitzen sowie mit ihren einen Enden miteinander verbunden sind, wobei bei Nichtdrehantrieb der Antriebswelle die Schaltfeder (9) an dem ersten rotationssymmetrischen Bauelement (3, 7) und die Bremsfeder (10) an dem zweiten rotationssymmetrischen Bauelement (3, 7) (1, 11, 12) radial mit Reibschluß in Anlage und eine Drehbewegung der Gewindespindel (3) blockiert ist, wobei bei Drehantrieb der Antriebswelle in eine erste Drehrichtung der Reibschluß der Schaltfeder (9) mit dem ersten rotationssymmetrischen Bauelement (3, 7) und bei Drehantrieb der Antriebswelle in eine zweite Drehrichtung der Reibschluß der Bremsfeder (10) mit dem zweiten rotationssymmetrischen Bauelement (1, 11, 12) lösbar ist und wobei die Bremsfeder (10) mit einem größeren Reibmoment an dem zweiten rotationssymmetrischen Bauelement (1, 11, 12) in Anlage ist als die Schaltfeder (9) an dem ersten rotationssymmetrischen Bauelement (3, 7) in Anlage ist und das erste rotationssymmetrische Bauelement (3, 7) ein zylindrischer Teil der Gewindespindel (3) oder ein mit der Gewindespindel (3) fest verbundenes erstes zylindrisches Element (7) ist, wobei der zylindrische Teil der Gewindespindel (3) oder das zylindrisehe Element (7) von der Schaltfeder (9) umschlossen ist und wobei die Bremsfeder (10) mit ihrem Außenumfang in Anlage an der zylindrischen Innenwand des Gehäuses (1) oder eines mit dem Gehäuse (1) fest verbundenen Elements (11) ist.

2. Antriebseinrichtung nach Anspruch 1, **dadurch gekennzeichnet, daß** die Schaltfeder (9) und die Bremsfeder (10) einteilig ausgebildet sind.

3. Antriebseinrichtung nach Anspruch 2, **dadurch gekennzeichnet, daß** die Schaltfeder (9) und die Bremsfeder (10) unterschiedliche Durchmesser aufweisen.

4. Antriebseinrichtung nach einem der vorhergehenden Ansprüche, **dadurch gekennzeichnet,** daßdasmitderGewindespindel(3) fest verbundene erste zylindrische Element (7) eine fest auf der Gewindespindel (3) angeordnete Nabe (7) ist.

5. Antriebseinrichtung nach einem der vorhergehenden Ansprüche, **dadurch gekennzeichnet, daß** die Gewindespindel (3) drehbar in dem Gehäuse (1) gelagert ist.

6. Antriebseinrichtung nach einem der vorhergehenden Ansprüche, **dadurch gekennzeichnet, daß** die Gewindespindel (3) von einem reversierbaren Elektromotor drehbar antreibbar ist.

## Claims

1. Drive device for a movable component, comprising a first fixing element which can be connected at a first end to a first rotationally symmetrical component (3, 7), and comprising a second rotationally symmetrical component (1, 11, 12) which can be moved relative to the first rotationally symmetrical component (3, 7) at the end of the latter that is opposite to the first fixing element, and which has, at its end opposite to the first fixing element, a second fixing element that can be fixed to the movable component, comprising a spindle drive having a threaded spindle (3) and a spindle nut arranged on the threaded spindle (3), by means of which the first fixing element and the second fixing element can be movably driven axially relative to each other, wherein the spindle of the spindle drive can be rotationally driven by a drive shaft that can be rotationally driven reversibly about an axis of rotation (6) by a rotary drive arranged in a housing (1) so as to be fixed against rotation, the axis of rotation (6) extending coaxially relative to the threaded spindle (3), and comprising a brake device, by means of which an axially relative converging movement of the first and second fixing element can be blocked by applying an axial force to the first and/or second rotationally symmetrical component (3, 7) (1, 11, 12), **characterized in that** the brake device is a wrap spring brake, which has a switching spring (9) and a braking spring (10), which are wound in the axial direction, and the switching spring (9) and the braking spring (10) have different winding directions and are connected to each other at their respective ends, wherein, when the drive shaft is not driven in rotation, the switching spring (9) on the first rotationally symmetrical component (3, 7) and the braking spring (10) on the second rotationally symmetrical component (3, 7) (1, 11, 12) are radially in contact with a frictional connection and a rotational movement of the threaded spindle (3) is blocked, wherein, when the drive shaft is driven in rotation in a first direction of rotation, the frictional connection of the switching spring (9) to the first rotationally symmetrical component (3, 7) can be released, and when the drive shaft is driven in rotation in a second direction of rotation, the frictional connection of the braking spring (10) to the second rotationally symmetrical component (1, 11, 12) can be released, and wherein the braking spring (10) is in contact with the second rotationally symmetrical component (1, 11, 12) with a greater frictional torque than the switching spring (9) is in contact with the first rotationally symmetrical component (3, 7), and the first rotationally symmetrical component (3, 7) is a cylindrical part of the threaded spindle (3) or a first cylindrical element (7) fixedly connected to the threaded spindle (3), wherein the cylindrical part of the threaded spindle (3) or the cylindrical element (7) is enclosed by the switching spring (9), and wherein the braking spring (10) is in contact with its outer circumference on the cylindrical inner wall of the housing (1) or an element (11) fixedly connected to the housing (1).

2. Drive device according to Claim 1, **characterized in that** the switching spring (9) and the braking spring (10) are formed in one piece.

3. Drive device according to Claim 2, **characterized in that** the switching spring (9) and the braking spring (10) have different diameters.

4. Drive device according to one of the preceding claims, **characterized in that** the first cylindrical element (7) fixedly connected to the threaded spindle (3) is a hub (7) fixedly arranged on the threaded spindle (3).

5. Drive device according to one of the preceding claims, **characterized in that** the threaded spindle (3) is rotatably supported in the housing (1).

6. Drive device according to one of the preceding claims, **characterized in that** the threaded spindle (3) can be driven in rotation by a reversible electric motor.

## Revendications

1. Dispositif d'entraînement pour un composant mobile, comportant un premier élément de fixation pouvant être relié à un premier élément structural (3, 7) à symétrie de révolution à une première extrémité et comportant un deuxième élément structural (1, 11, 12) à symétrie de révolution mobile par rapport au premier élément structural (3, 7) à symétrie de révolution à l'extrémité opposée au premier élément de fixation, lequel deuxième élément structural comprend, à son extrémité opposée au premier élément de fixation, un deuxième élément de fixation pouvant être fixé au composant mobile, comportant un entraînement à broche comprenant une broche filetée (3) et un écrou de broche disposé sur la broche filetée (3), entraînement à broche au moyen duquel le premier élément de fixation et le deuxième élément de fixation peuvent être entraînés de manière mobile axialement l'un par rapport à l'autre, la broche de l'entraînement à broche pouvant être entraînée en rotation de manière réversible autour d'un axe de rotation (6) par un arbre d'entraînement pouvant être entraîné en rotation par un entraînement rotatif disposé de manière solidaire en rotation dans un carter (1), lequel axe de rotation s'étend coaxialement par rapport à la broche filetée (3), et comportant un dispositif de freinage au moyen duquel un déplacement axial l'un par rapport à l'autre du premier et du deuxième élément de fixation peut être bloqué par une application de force sur le premier et/ou le deuxième élément structural (3, 7) (1, 11, 12) à symétrie de révolution, **caractérisé en ce que** le dispositif de freinage est un frein à ressort enroulé qui présente un ressort de commutation (9) et un ressort de freinage (10) qui sont enroulés dans la direction axiale, et le ressort de commutation (9) et le ressort de freinage (10) présentent des sens d'enroulement différents et sont reliés l'un à l'autre par l'une de leurs extrémités, et en cas d'absence d'entraînement en rotation de l'arbre d'entraînement, le ressort de commutation (9) étant en appui contre le premier élément structural (3, 7) à symétrie de révolution radialement avec engagement par friction et le ressort de freinage (10) étant en appui contre le deuxième élément structural (3, 7) (1, 11, 12) à symétrie de révolution radialement avec engagement par friction et un mouvement rotatif de la broche filetée (3) étant bloqué, et en cas d'entraînement en rotation de l'arbre d'entraînement dans un premier sens de rotation, l'engagement par friction du ressort de commutation (9) avec le premier élément structural (3, 7) à symétrie de révolution pouvant être relâché et, en cas d'entraînement en rotation de l'arbre d'entraînement dans un deuxième sens de rotation, l'engagement par friction du ressort de freinage (10) avec le deuxième élément structural (1, 11, 12) à symétrie de révolution pouvant être relâché, et le ressort de freinage (10) étant en appui contre le deuxième élément structural (1, 11, 12) à symétrie de révolution avec un plus grand couple de friction que celui avec lequel le ressort de commutation (9) est en appui contre le premier élément structural (3, 7) à symétrie de révolution et le premier élément structural (3, 7) à symétrie de révolution étant une partie cylindrique de la broche filetée (3) ou un premier élément cylindrique (7) relié fixement à la broche filetée (3), la partie cylindrique de la broche filetée (3) ou l'élément cylindrique (7) étant entouré(e) par le ressort de commutation (9), et le ressort de freinage (10) étant, par sa périphérie extérieure, en appui contre la paroi intérieure cylindrique du carter (1) ou d'un élément (11) relié fixement au carter (1).

2. Dispositif d'entraînement selon la revendication 1, **caractérisé en ce que** le ressort de commutation (9) et le ressort de freinage (10) sont réalisés d'un seul tenant.

3. Dispositif d'entraînement selon la revendication 2, **caractérisé en ce que** le ressort de commutation (9) et le ressort de freinage (10) présentent des diamètres différents.

4. Dispositif d'entraînement selon l'une des revendications précédentes, **caractérisé en ce que** le premier élément cylindrique (7) relié fixement à la broche filetée (3) est un moyeu (7) disposé fixement sur la broche filetée (3).

5. Dispositif d'entraînement selon l'une des revendications précédentes, **caractérisé en ce que** la broche filetée (3) est montée à rotation dans le carter (1).

6. Dispositif d'entraînement selon l'une des revendications précédentes, **caractérisé en ce que** la broche filetée (3) peut être entraînée en rotation par un moteur électrique réversible.
